# FASCICULE DE BREVET EUROPEEN

(11) **EP 1 342 662 B1**
(45) Date de publication et mention de la délivrance du brevet: **17.01.2007**
(21) Numéro de dépôt: 03290541.6
(22) Date de dépôt: 07.03.2003
(51) Int. Cl.: B64C 1/20, B64D 11/06, B60P 7/08, F16B 7/18

(54) **Dispositif de fixation d'un equipement dans des rails type aeronautique**
Befestigungsvorrichtung einer Ausstattung in Schienen sStandard-Luftfahrtanwendung
Fixation device of an equipment in rails of aeronautic type

(30) Priorité: 08.03.2002 FR 0202964
(43) Date de publication de la demande: 10.09.2003
(73) Titulaire: Daouk, Antar, F-75016 Paris (FR)
(72) Inventeur: Daouk, Antar, F-75016 Paris (FR)

(56) Documents cités:
- US-A- 4 185 799
- US-A- 4 496 271

## Description

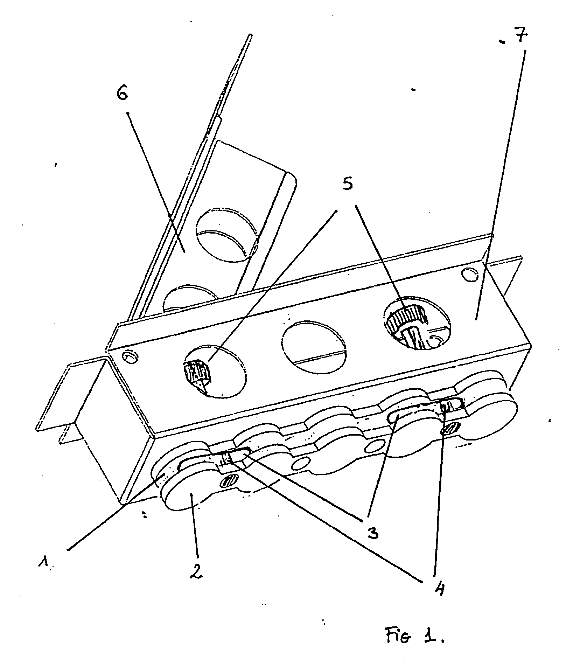

Figure 1 : Dispositif de fixation prêt à être installé

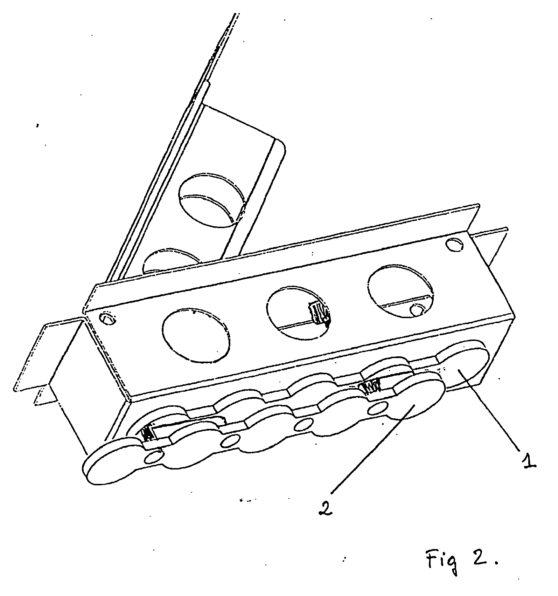

Figure 2 : Translation de la partie mobile (2) par rapport à la partie fixe (1).

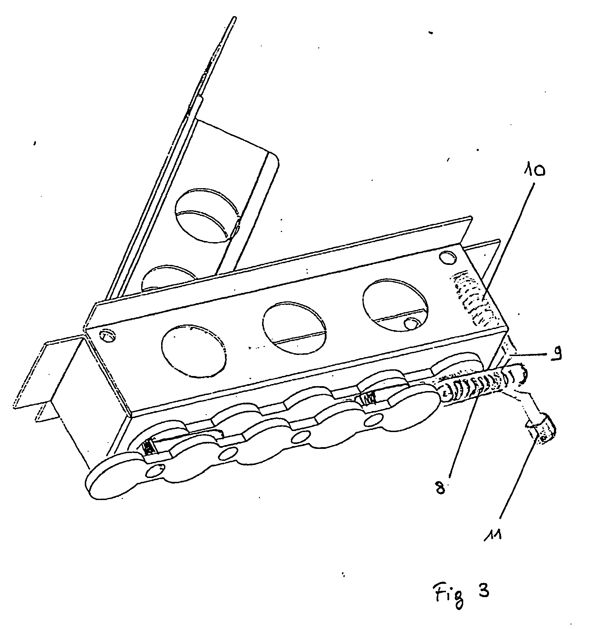

Figure 3 : Verrouillage automatique de la partie mobile (2)

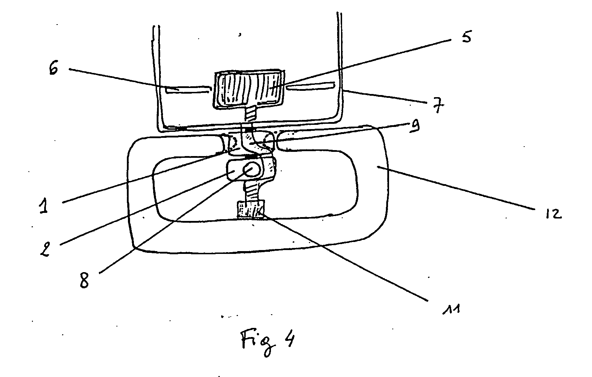

Figure 4 : Dispositif de fixation installé dans le rail type aéronautique

Dispositif permettant la fixation d'un équipement dans des rails type aéronautique comportant des alvéoles régulièrement espacées.

Les systèmes existants sont en général, des pions d'ancrage coulissants que l'on bloque au moyen de cavaliers à déplacement vertical ou incline, actionnés soit par des leviers, des ressorts ou des vis et qui ne peuvent fixer le pion qu'en effectuant une translation le long du rail comme c'est le cas dans le brevet américain n° 4 185 799 du 29 janvier 1980.

D'autres systèmes insèrent sous le pion d'ancrage un taquet selon une cinématique elliptique.

La présente invention a pour but de permettre à l'opérateur de placer le dispositif de fixation à l'endroit souhaité dans le rail et de pouvoir le verrouiller sans avoir à opérer la translation de l'équipement associé au dispositif de fixation ni du dispositif de fixation lui-même.

Il en ressort une grande précision d'installation de l'équipement, une meilleure tenue dans le rail par une augmentation de la surface de prise dans le rail puisque la distance de déplacement nécessaire à l'ancrage est supprimée.

Rapidité de fixation et de démontage.

Possibilité de se fixer sur deux alvéoles du rail mais aussi sur un nombre bien supérieur, le nombre n'étant pas limité, pour améliorer la tenue à l'arrachement, sans affecter aucun des avantages ci-dessus mentionnés.

Possibilité d'installer plusieurs dispositifs de fixation associés à un même équipement sur des rails qui ne seraient pas parallèles et/ou dans le même plan et/ou sécants dans des plans différents.

Le dispositif de fixation est composé de :
- une pièce fixe (1) pouvant être métallique dont la forme correspond aux alvéoles du rail (12). Cette pièce est fixée sur une platine (7) pouvant être une boîte ou une plaque de liaison à l'équipement devant être installé dans le moyen de transport.
- une pièce mobile (2), pouvant être identique à la pièce fixe (1), placée sous celle-ci et reliée à elle par une ou plusieurs liaisons.

La pièce mobile (2) se déplace parallèlement et longitudinalement par rapport à la pièce fixe (1) et crée ainsi un décalage sensiblement égal à une demi-alvéole.

Les deux pièces fixe et mobile (1, 2), superposées et situées dans des plans parallèles, sont reliées entre elles au moyen d'un ergot (4) au moins traversant une lumière oblongue (3) au moins placée longitudinalement sur la pièce fixe (1). Ces ergots sont surmontés d'une ou plusieurs molettes (5) permettant de bloquer, par vissage en prenant appui sur la platine (7), les ergots à la position voulue. Les pièces fixe et mobile (1, 2) constituent ainsi un dispositif de fixation coulissant.

La pièce mobile (2) coulisse à l'intérieur du rail (12) et lorsqu'elle est en position décalée vient se placer contre la face intérieure des alvéoles du rail afin d'éviter tout mouvement.

Une seconde possibilité pour sécuriser le verrouillage du dispositif consiste à rabattre un capot de sécurité (6). Le capot verrouille le ou les ergots lorsque la pièce mobile (2) est décalée par rapport à la pièce fixe (1). Le capot, qui ne peut prendre sa position que lorsque le ou les ergots verrouillent le dispositif, empêche le déplacement du ou des ergots et de ce fait interdit tout déverrouillage intempestif ; le capot constitue un élément de contrôle visuel du bon verrouillage du système.

Pour un même équipement, on peut utiliser un ou plusieurs dispositifs de fixation coulissants pouvant être installés sur le même rail à des emplacements différents mais aussi conjointement dans des rails pouvant être non parallèles situés dans des plans différents.

Une réalisation préférée de ce dispositif, basée sur le même principe, consiste à rendre le verrouillage automatique. Dans ce cas, la pièce mobile (2), pouvant comporter une ou plusieurs parties, est transférée par un système de pression (8) être un ressort. Le déclenchement du ressort se fait au moyen d'une gâche (9) avec ressort de rappel (10) actionnée par un doigt d'indexage (11) réglable en longueur. Le doigt d'indexage est repoussé par le fond de la gorge du rail (12) lorsque la pièce fixe (1) est installée. Cette méthode permet le verrouillage automatique du dispositif ; le déverrouillage, pour des raisons de sécurité, se fait manuellement en transférant les ergots en position d'installation et en soulevant conjointement le dispositif afin de libérer la course du doigt d'indexage qui relâche le système de pression dont le verrouillage est assuré par une gâche en position de repos.

## Revendications

1. Dispositif permettant la fixation d'un équipement dans des rails à alvéoles de type aéronautique comprenant une double structure dont la forme correspond à celle des alvéoles du rail, dotée d'une partie fixe (1) par rapport à une platine (7) et d'une partie mobile (2), ces deux parties étant superposées dans des plans parallèles, la partie mobile (2) permet un coulissement d'une longueur sensiblement égale à une demi-alvéole par rapport à la partie fixe **caractérisé en ce qu'**il comporte au moins une molette de blocage (5) pour verrouiller par tissage au moins ergot (4)traversant une lumière oblongue (3) placée longitudinalement sur la partie fixe (1), l'endroit souhaité dans le rail, sans avoir à opérer la translation de l'équipement associé au dispositif de fixation, la 1, platine (7) comprenant un système de sécurité, pouvant être un capot (6), empêchement le déplacement de l'ergot (4) lorsque la partie mobile (2) est décalée par rapport à la partie fixe (1).

2. Dispositif de fixation selon la revendication 1, **caractérisé en ce qu'**au moins un doigt d'indexage (11) réglable en longueur relié à la partie fixe (1), se déplaçant au contact de la gorge du rail (12), lors de l'installation de la partie fixe (1) dans les alvéoles, déclenche, au moyen d'une gâche (9), un dispositif de pression à ressort (8) générant la translation de la pièce mobile.

3. Dispositif de fixation selon la revendication 2, **caractérisé en ce que** le déverrouillage manuel pour des raisons de sécurité, consiste à transférer, au moyen d'un ergot (4) au moins, la partie mobile (2) dans l'axe de la partie fixe (1) en comprimant le ressort (8) et à armer en position d'installation la partie mobile (2) par soulèvement du dispositif hors du rail libérant ainsi le doigt d'indexage (11) qui, au moyen de la gâche (9), maintient le ressort armé.

## Claims

1. Fastening device for fixing an equipment into the aeronautical type seat tracks comprising a double structure which shape meets the seat tracks shape, fitted with a fixed part (1) in relation to a plate (7) and a mobile part (2), those two parts being superposed into parallel plans, the mobile part (2) allows a sliding motion within the length of a half-cell in relation to the fixed part (1) **characterized in that** it comprises at least one blocking knob (5) to fasten by screwing one lug (4) at least going through an oblong hole (3), longitudinally placed on the fixed part (1), at the required place in the seat tracks, without having to operate the translatory movement of the equipment associated to the fastening device, the plate (7) comprising a safety system, that could be a safety cover (6), avoiding the moving of the lug (4) when the mobile part (2) is shift in relation to the fixed part (1).

2. Fastening device according to claim 1 wherein at least one retractable bolt (11) which length is adjustable related to the fixed part (1), moving when touching the inner part of the seat tracks (12) when the fixed part (1) is installed in the cells of the seat tracks, releases, by the mean of a catch (9), a spring pressure device (8) generating the translatory movement of the mobile part.

3. Fastening device according to claim 2 wherein-the manual unlocking, for safety reasons, consists in transferring, by the mean of a lug (4) at least, the mobile part (2) in the axle of the fixed part (1) by compressing the spring (8) and in setting up the mobile part (2) by lifting the device outside the seat tracks releasing in this way the retractable bolt (11) which, by the mean of the catch (9), keeps the spring compressed.

## Patentansprüche

1. Vorrichtung zum zeitweiligen Verbinden eines bewegbaren Raumszubehör in Sitzesschienen des Luftschiffestyp der aus eine doppelt Struktur besteht dessen Form den Sitzesschienen Zeichnung ähnlich ist, mit einem festen Teil (1) Beziehung zu einem Sockel (7) und einem beweglichen Teil (2) beide Teile übereinander parallel liegen das beweglichen Teil (2) das Schieben von eine weite von ungefähr ein halbes Zahn in Verhältnis zu den festen Teil (1) ermöglicht wobei er aus mindest eine Befestigung schraube (5) behält um mindestens einen Nocken (4) durch Schauben zu befestigen der durch einen der längliche loch (3) durch führt der Längsachse auf den festen Teil (1) auf den vom Sitzesschiene gewünschten Platz, ohne das die zusammengebundene Vorrichtung an die Verbindung Vorrichtung zu verschieben den Sockel (7) mit eine Sicherungs-Vorrichtung die eine Haube (6) sein kann, die Bewegung des Nocken (4) vermeidet wenn das beweglichen Teil (2) von dem festen Teil (1) versetz ist.

2. Vorrichtung nach Anspruch 1 **dadurch gekennzeichnet dass** mindestens ein Speerbolzen (11) in der Länge einstellbar ist und mit den festen Teil (1) gebunden ist der sich in Engerbeziehung zu der Sitzschienenrille (12) bewegt, wenn den festen Teil (1) in den Sitzschienen löst durch einem Schiessblech (9) einer Feder gedruckten System (8) der dass Schieben des bewegliches Teil zielt.

3. Vorrichtung nach Anspruch 2 **dadurch gekennzeichnet dass** die Handlösung für Sicherungsgründen in Übersetzung mindestens eines Nocken (4) das beweglichen Teil (2) in die Richtung des feste Teil (1) bestehet durch Spannung des Feder (8) und in die Halterung Position des Beweglichen Teil (2) zu laden durch die Aufhebung der Vorrichtung aus der Sitzschienen durch Befreiung des Speerbolzen (11) der durch das Schließblech (9) die Feder geladen hält.
